# EUROPÄISCHE PATENTANMELDUNG

(11) **EP 4 346 327 A1**
(43) Veröffentlichungstag der Anmeldung: **03.04.2024**
(21) Anmeldenummer: 23200700.5
(22) Anmeldetag: 29.09.2023
(51) Int. Cl.: H04W 76/50, G08B 27/00, H04W 4/02, H04W 4/90

(54) **VERFAHREN UND SYSTEM ZUR WARNUNG, KOMMUNIKATION UND NOTRUFSTEUERUNG IN AUTARKEN NETZEN**

(30) Priorität: 29.09.2022 DE 102022003623
(71) Anmelder: Eckert, Manuel, 14772 Brandenburg/Havel (DE)
(72) Erfinder: Eckert, Manuel, 14772 Brandenburg/Havel (DE); Naumann, Michael, 14776 Brandenburg/Havel (DE)
(74) Vertreter: Hertin und Partner Rechts- und Patentanwälte PartG mbB

(57) **Zusammenfassung**

Die Erfindung ist dem technologischen Gebiet des Notfallmanagements, der Katastrophen-Kommunikation (KatKomm) zuzuordnen. Die Erfindung betrifft ein Verfahren zur Warnung, Kommunikation und Notrufsteuerung in autarken Netzen. Dazu wird ein Netzwerk (KatKomm-Netz) umfassend KatController bereitgestellt. Die KatController sind teilweise mit Entitäten verbunden. Von den Entitäten, KatControllern und/oder externen Quellen werden Auslöseereignisse verarbeitet. Ausgehend von den Entitäten auf Basis eines Auslöseereignisses Steuerungsbefehle ausgesendet, wobei die Steuerungsbefehle anhand des Auslöseereignisses ausgewählt werden und KatController und/oder geographischen Bereichen zugeordnet werden. Die Steuerungsbefehle werden von den KatControllern abgerufen und erzeugen ein Signal. Das Empfangen und/oder Versenden erfolgt als eine Einzeladressierung, Gruppenadressierung und/oder Bereichsadressierung und/oder Fernadressierung.

Des Weiteren betrifft die Erfindung ein System zur Ausführung des Verfahrens sowie ein Computerprogrammprodukt.

## Beschreibung

Die Erfindung ist dem technologischen Gebiet des Notfallmanagements, der Katastrophen-Kommunikation (KatKomm) zuzuordnen. Die Erfindung betrifft ein Verfahren zur Warnung, Kommunikation und Notrufsteuerung in autarken Netzen. Dazu wird ein Netzwerk (KatKomm-Netz) umfassend KatController bereitgestellt. Die KatController können mit Entitäten verbunden sein. Von den Entitäten, KatControllern und/oder externen Quellen werden Auslöseereignisse verarbeitet. Ausgehend von den Entitäten werden auf Basis eines Auslöseereignisses Steuerungsbefehle ausgesendet, wobei die Steuerungsbefehle anhand des Auslöseereignisses ausgewählt werden und KatController und/oder geographischen Bereichen zugeordnet werden. Die Steuerungsbefehle werden von den KatControllern abgerufen und erzeugen ein Signal. Das Empfangen und/oder Versenden erfolgt als eine Einzeladressierung, Gruppenadressierung und/oder Bereichsadressierung.

Des Weiteren betrifft die Erfindung ein System zur Ausführung des Verfahrens sowie ein Computerprogrammprodukt.

### Hintergrund und Stand der Technik

Auf dem Gebiet der Warnung, Alarmierung und Information der Bevölkerung haben sich im Laufe der Jahre eine Vielzahl von Anwendungen etabliert. Hierbei kann unter Systemen der allgemeinen öffentlichen Warnung, der die Sirenen zuzuordnen sind, und den persönlich-"standortbezogenen" Anwendungen unterschieden werden. Letztere können derzeit als sekundäre Warnungen, wie in Deutschland NINA, Katwarn und Cell Broadcast, sowie über Radio, TV, Anzeigetafeln usw. ausgelöst werden.

Diese haben den Nachteil, dass die Funktionsfähigkeit der Systeme außerhalb des Einflussbereiches des Katastrophenschutzes liegt. Neben der Warnung und Alarmierung, als erste Stufe, ist die kontinuierliche Information der Bevölkerung während eines Ereignisses eine wesentliche Anforderung an den Katastrophenschutz.

Dazu gehört, dass alle zuständigen Stellen des Katastrophenschutzes den Zugang zur Aussendung von Warnmeldungen haben und insbesondere auch Kommunen Informationen für ihren Zuständigkeitsbereich übermitteln können.

Bei einem Ausfall der regulären Kommunikationsverfahren, bspw. Durch einen langandauernden Stromausfall, ist die Kommunikation gestört. Die Auslösung von Sirenen im Katastrophenfall ermöglicht nur eine beschränkte akustische Information, ergänzende optische Signale wären nicht vorhanden, was insbesondere hörgeschädigte Menschen benachteiligt.

Die RICHTLINIE (EU) 2018/1972 DES EUROPÄISCHEN PARLAMENTS UND DES RATES vom 11. Dezember 2018 über den europäischen Kodex für die elektronische Kommunikation verlangt von den Mitgliedsstaaten die Gleichwertigkeit hinsichtlich des Zugangs und der Wahlmöglichkeiten für Endnutzer mit Behinderungen (Artikel 110, 111).

Darüber hinaus beschreibt die europäische Norm EN 54-23 | 2010-06 (Brandmeldeanlagen - Teil 23: Feueralarmeinrichtungen - Optische Signalgeber) Anforderungen, die auch für die Bevölkerungsalarmierung im 2-Sinne Prinzip ihre Berechtigung haben.

Die aktuell genutzten Sirenen erfüllen diese Forderung nicht, da sie zum Beispiel von hörgeschädigten Menschen und generell von allen Menschen in lautstarken oder auch akustisch gedämmten Umgebungen nicht wahrgenommen werden können. Darüber hinaus ertönt das Sirenensignal in der Regel nur einmal. Eine optische Signalisierung kann über einen längeren Zeitraum erfolgen und so auf den Abruf ergänzender Informationen hinweisen bzw. diese bereitstellen.

Die aktuell genutzten Übertragungsverfahren zur Steuerung der Sirenen können nicht autark genutzt werden und bieten auch nicht die Möglichkeit eines dynamischen Netzaufbaus, welcher die Erreichbarkeit und Ausfallsicherheit erhöht. Die Adressierung der Sirenen erfolgt nicht geografisch und ist sehr komplex, sodass Änderungen direkt an den Sirenen vor Ort vorgenommen werden müssen. Sirenen werden an festen Standorten eingesetzt, in Gebäuden oder an entfernteren Orten werden sie nicht immer wahrgenommen. An Sirenenstandorten, welche oft zentral gelegen sind, gibt es keine Möglichkeit der Kommunikation in Krisen- oder Notsituationen.

Die zuletzt häufiger auftretenden Waldbrände haben zu Tage gebracht, dass ebenso die Kommunikation der Feuerwehren aus verschiedenen Bundesländern untereinander über Digitalfunk nicht funktioniert. Mithin liegt im Stand der Technik ein Bedarf an Optimierung vor, die Warnung, Kommunikation und Notrufsteuerung zu verbessern.

Das US Patent US 10560322 B2 beschreibt ein Mesh-Protokoll für das Routing in einem schmalbandigen Funknetzwerk. Das darin beschriebene Konzept sieht jedoch einen zentralen Server sowie ein Gateway vor.

### Aufgabe der Erfindung

Aufgabe der Erfindung ist es, die Nachteile aus dem Stand der Technik zu beseitigen. Insbesondere ist eine Aufgabe der Erfindung, eine Alternative zu bieten, um eine bedarfsgerechte Übermittlung von Informationen und/oder Notrufen an Bürger und/oder Leitstellen ermöglichen zu können.

### Zusammenfassung der Erfindung

Die Aufgabe wird gelöst durch die unabhängigen Ansprüche. Vorteilhafte Ausgestaltungen der Erfindung sind in den abhängigen Ansprüchen offenbart.

In einem ersten Aspekt betrifft die Erfindung ein Verfahren zur Warnung, Kommunikation und Notrufsteuerung in autarken Netzen umfassend folgende Schritte:
a. Bereitstellen eines Netzwerks umfassend KatController, wobei die KatController mit Entitäten verbunden sein können,
b. verarbeiten von Auslöseereignissen von den Entitäten, den KatControllern und/oder von externen Quellen,
c. senden von Steuerungsbefehlen ausgehend von den Entitäten auf Basis eines Auslöseereignisses, wobei die Steuerungsbefehle anhand des Auslöseereignisses ausgewählt werden und KatController und/oder geographischen Bereichen zugeordnet werden,
d. abrufen der zugeordneten Steuerungsbefehle von den KatControllern und erzeugen eines Signales aufgrund der Steuerungsbefehle,
e. empfangen und/oder versenden von Steuerungsbefehlen als eine Einzeladressierung, Gruppenadressierung und/oder Bereichsadressierung.

Die Kombination der vorliegenden Erfindungsmerkmale führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinander stehen.

Die Erfinder waren mit verschiedenartigen Problemstellungen bei der Entwicklung der Erfindung konfrontiert und mussten diese durch ein hohes Maß an erfinderischen Überlegungen lösen. Insbesondere war es herausfordernd, eine derartige Verbindung bereitzustellen, durch welche eine schnelle und/oder automatisierte Reaktion für notwendige Maßnahmen infolge einer Warnmeldung und/oder eines Notfalls einzuleiten.

Vorteilhafterweise können durch die Nutzung eines autarken Netzes unterschiedliche Übertragungsprotokolle zur Steuerung der Entitäten durch KatController mit einer geographischen Adressierung zur örtlichen Warnung und Alarmierung erfolgen. Die geographische Adressierung meint hierbei insbesondere eine derartige Adressierung, dass eine hinsichtlich der Lokalität und/oder Örtlichkeit zielgenaue Übertragung erfolgen kann. Die geographische Adressierung umfasst bevorzugt eine Einzeladressierung, Gruppenadressierung und/oder Bereichsadressierung.

Eine Einzeladressierung bezieht sich bevorzugt auf eine Adresse, insbesondere auf eine bestimmte ID. Dies kann beispielsweise die Geräte-ID oder MAC-Adresse eines einzelnen Gerätes sein. Auch mehrere Ids können als Adresse vorzugsweise angegeben sein. Die Gruppenadressierung meint bevorzugt eine vordefinierte Gruppe von KatControllern. Hierdurch kann vorteilhaft ein im Wesentlichen paralleles Senden und/oder Empfangen von Steuerungsbefehlen ausgeführt werden und mithin kein sequentieller Prozess, was die Effizienz des Verfahrens erhöht. Es können auch bevorzugt mehrere Gruppen adressiert und/oder einzelne oder mehrere Gruppen ausgeschlossen werden. Eine Bereichsadressierung betrifft bevorzugt alle KatController in einem geografischen Bereich. Die Anzahl der adressierten Geräte hängt vorzugsweise von der Anzahl der in dem geografischen Bereich befindlichen KatController ab. Bei der Nutzung von Konvertern/Gateways, die die Verbindung zu einem Fernbereich, also über ein KatKomm-Netz hinaus ermöglichen, wird bevorzugt ergänzend eine Fernadressierung verwendet. Hierbei wird die KatKomm-Nachricht (dast KatKomm-Datenpaket) zu dem jeweiligen Netzwerk-spezifischen Datenpaket des Gateway-Netzes hinzugefügt und zu dem Ziel-KatKomm-Netz übermittelt, wo es wiederum als KatKomm-Nachricht mit geografischer Adressierung an das Ziel gelangt. Der durchschnittliche Fachmann ist in der Lage, dies im Kontext korrekt einzuordnen.

Von besonderem Vorteil ist der Umstand, dass insbesondere durch die Nutzung eines autarken Netzes effektive Alarmierungen, vorzugsweise an Sirenen- und/oder anderen netzunabhängigen Standorten, ermöglicht werden. Hierdurch können vorteilhaft schnell und zuverlässig Maßnahmen eingeleitet und ergriffen werden, die andernfalls zu sicherheitskritischen Aspekten führen könnten.

Das in der US 10560322 B2 beschriebene Verfahren unterscheidet sich deutlich von den hier genannten Lösungen für die erfindungsgemäße Aufgabe, wie im Folgenden näher verdeutlicht wird.

Insbesondere wird durch das erfindungsgemäße Verfahren die Nutzung autarker Funknetze mit unterschiedlichen Übertragungsprotokollen zur Steuerung der Entitäten durch KatController mit einer geografischen Adressierung zur örtlichen Warnung und Alarmierung ermöglicht. Dabei kann es bevorzugt sein, dass die KatController beispielsweise mit Smartphones, Tablets, PCs, Pagern, Rauchwarnmeldern, Kurbelradios und/oder Signalleuchten gekoppelt (verbunden) und/oder integriert sind. KatController können bevorzugt stationär oder mobil eingesetzt werden. Ferner kann es bevorzugt sein, dass KatController angeschlossene akustische und optische Sirenen adressieren und/oder steuern.

Durch die Bereitstellung eines autarken Netzes, wie z. B. BOS/TETRA Funk und LoRaWAN, werden vorteilhaft effektive Alarmierungen, vorzugsweise an Sirenen- und/oder anderen netzunabhängigen Standorten, ermöglicht. Insbesondere kann ein autarkes Netz als Mesh-Netzwerk, beispielsweise ein autarkes LoRaWAN als Mesh-Netzwerk, die Übertragungsstabilität erhöhen. Durch eine zusätzliche Energieversorgung, beispielsweise mittels eines Akkus als Akkupufferung, kann vorteilhaft die Ausfallsicherheit erhöht werden.

LoRaWAN (engl.: Long Range Wide Area Network) bezeichnet bevorzugt ein Funknetzwerk auf Basis von LoRa und nutzt Frequenzbänder aus den lizenzfreien ISM-Bändern (engl.: Industrial, Scientific and Medical Band). LoRa ist ein offener Funkstandard für ein Low Power Wide Area Network (LPWAN) für kleine Datenmengen und mit hohen Reichweiten. Zusätzlich können auch lizenzierte Frequenzbereiche genutzt werden, um die Stabilität und Sicherheit zu erhöhen. Somit sind auch Anwendungen in sicherheitsrelevanten Bereichen möglich.

Ein Mesh-Netzwerk bietet die Vermaschung zahlreicher Knotenpunkte. Diese Knotenpunkte kommunizieren untereinander, somit sind alle Knotenpunkte gleichzeitig Empfänger und Sender.

Neben den autarken Funknetzen sind bevorzugt auch Verbindungen über Mobilfunk, WLAN, LAN, z. B. zur Übertragung von größeren Datenmengen oder für datenintensive Anwendungen, sowie Verbindungen über Satellit oder Kurzwelle, zur Erhöhung der Erreichbarkeit und Ausfallsicherheit, möglich.

Die KatController bieten vorteilhaft die Möglichkeit, Notrufe an die zuständige Leitstelle abzusetzen. Über stationäre und mobile KatController sind die Leitstellen und Einsatzkräfte auch länderübergreifend im Netzwerk (KatKomm-Netz) vernetzt, sodass über eine Adressierung gezielte Befehle, Koordination, Chat und/oder Audio-/Videokommunikation realisiert werden können. KatController können bevorzugt modular aufgebaut sein und hierdurch verschiedene Übertragungstechnologien verwenden. Insbesondere können bevorzugt die KatController als Gateway fungieren.

Relevant ist insbesondere, dass das bevorzugte Verfahren in einem autarken Netz ausgeführt wird. Ein autarkes Netz bezeichnet bevorzugt ein (Funk-)netz, das unabhängig von herkömmlichen Funkanbietern bereitgestellt vorliegt. Vorteilhafterweise kann eine Nutzung des autarken Funknetzes auch dann gewährleistet werden, wenn sich beispielsweise ein Stromausfall, ein Zusammenbruch des herkömmlichen Mobilfunknetzes und/oder Serverstörungen von externen Anbietern ereignet haben.

Ferner ist es bevorzugt, dass ein Netzwerk bereitgestellt wird, welches insbesondere KatController umfasst. Das Netzwerk umfassend KatController kann insbesondere auch als KatKomm-Netz bezeichnet werden. KatController bezeichnen bevorzugt eine Software und/oder eine Hardware, die insbesondere dafür ausgelegt sind, untereinander und/oder mit Entitäten in einer Verbindung zu stehen. Die Verbindung meint bevorzugt eine Datenverbindung, sodass ein Austausch von Daten durch die Verbindung ermöglicht wird. So kann es bevorzugt sein, dass die KatController als Sende- und/oder Empfangseinrichtungen miteinander verbunden sind. Bevorzugt sind die KatController möglichst flächendeckend vorhanden, sodass ein geographisch gesehen großflächiger Bereich von den KatControllern abgedeckt werden kann. Eine redundante, insbesondere sichere Verbindung des Netzwerkes wird hierdurch ermöglicht. Weiterhin kann es bevorzugt sein, dass die KatController als Knotenpunkte des Netzwerkes vorliegen.

Darüber hinaus ist es bevorzugt, dass ein Verarbeiten von Auslöseereignissen von bzw. an den Entitäten, den KatControllern und/oder von externen Quellen ausgeführt wird. Ein Verarbeiten meint insbesondere die Ausführung von Rechenoperationen im Sinne eines Datenverarbeitungsprogramms, um entsprechende Schritte einzuleiten, die für weitere Schritte des Verfahrens bevorzugt sind. Die Entität kann hierbei bevorzugt ein externes Gerät oder eine externe Software sein, welche mit den KatControllern verbunden ist. Eine externe Quelle kann bevorzugt eine Quelle meinen, die vorzugsweise mit den KatControllern verbunden ist, jedoch nicht im Netzwerk der KatController eingebracht ist bzw. außerhalb des Netzwerkes vorliegt.

Bevorzugt werden ausgehend von Entitäten Steuerungsbefehle ausgesendet, welche auf einem Auslöseereignis basieren. Das Auslöseereignis umfasst jedes Ereignis, welches einen Indikator darstellt, dass eine potentielle Gefahrensituation eintreten könnte oder eingetreten ist. Die Steuerungsbefehle werden insbesondere anhand des Auslöseereignisses ausgewählt. Ferner werden vorzugsweise die Steuerungsbefehle den KatControllern und/oder geographischen Bereichen zugeordnet. Die Steuerungsbefehle umfassen vorzugsweise einen oder mehrere Datensätze und/oder Informationen. Die Entitäten senden die Steuerungsbefehle an die KatController. Dies kann durch ein Netzwerk, eine drahtlose und/oder kabelgebundene Verbindung erfolgen.

Des Weiteren ist es bevorzugt, dass die KatController die ihnen zugeordneten Steuerungsbefehle abrufen und/oder empfangen, vorzugsweise über Funknetze. Insbesondere kann hierdurch ein Signal (als Ausgabesignal) erzeugt werden. Das Signal kann ein optisches und/oder akustisches Signal sein. Entitäten, wie beispielsweise PCs, können bevorzugt dazu eingerichtet sein, vorzugsweise im Zusammenwirken mit einer App, einen Notruf auszulösen. Die Entitäten, wie Leitstellen-PCs und/oder Leitstellen-Server und/oder Leitstellen-Software, sind dazu eingerichtet, den Notruf zugeordneten Datensatz von dem KatController und/oder einer Servereinrichtung abzurufen oder von diesen zu empfangen.

In einer weiteren bevorzugten Ausführungsform ist das Verfahren dadurch gekennzeichnet, dass das Senden von Steuerungsbefehlen durch die Erzeugung, Übermittlung und/oder Auswertung eines Datensatzes ergänzt wird oder diesen umfasst, wobei bevorzugt der Datensatz eine Adresse als einen geografischen Bereich in Form eines Polygons, Punktes und/oder oder Kreises (Punkt, Radius) und/oder Daten zur Klassifizierung umfasst, wobei bevorzugt der Datensatz alternativ eine ID eines bestimmten KatControllers oder einer Gruppe von KatControllern und weitere Informationen enthält; sodass vorzugsweise eine örtliche Zuordnung der Warnung zu KatControllern anhand des geografischen Bereichs und/oder anhand der ID des KatControllers oder der Gruppe von KatControllern erfolgt, wobei bevorzugt der Datensatz von den KatControllern empfangen, versendet und/oder ausgewertet wird, wobei bevorzugt der Datensatz optisch und/oder akustisch angezeigt wird.

Die Erzeugung, Übermittlung und/oder Auswertung eines Datensatz als Ergänzung oder als Teil des Versendens der Steuerungsbefehle hat sich dahingehend als vorteilhaft erwiesen, dass eine besonders optimierte Nutzung einer geografischen Adressierung genutzt werden kann. Die genannten bevorzugten Geometrien zur Adressierung des geografischen Bereiches haben sich hierfür als besonders nützlich erwiesen. Die örtliche Zuordnung der Warnungen zu KatController erfolgt bevorzugt anhand des geographischen Bereiches und/oder anhand der ID des KatControllers. Mittels der ID kann eine Authentifizierung und/oder Erkennung des KatControllers ausgeführt werden. Der Datensatz kann wiederrum von den KatControllern empfangen, versendet und/oder ausgewertet werden. Ferner kann bevorzugt der Datensatz akustisch und/oder optisch angezeigt werden. Die optische und/oder akustische Anzeigbarkeit hat sich bewährt, um die Anzeige deutlich und präzise veranschaulichen und vermitteln zu können.

In einer weiteren bevorzugten Ausführungsform ist das Verfahren dadurch gekennzeichnet, dass
a. die Entitäten vom Bund, Land, Katastrophenschutzeinrichtungen, Kommunen Leitstellen und/oder Feuerwehren nach einer Authentifizierung betrieben und/oder Warnungen, Alarme und/oder Informationen für ihren Zuständigkeitsbereich auslösen und/oder bereitgestellt werden und/oder
b. die KatController stationär und/oder mobil, bevorzugt mit einem zusätzlichen Akku- und/oder Solarbetrieb, verwendet und die Signale und/oder andere Informationen verarbeitetet und/oder ausgegeben werden, wobei eine Ermittlung der geografischen Position mittels einer Satelliten- und/oder terrestrischer Positionsbestimmungseinrichtung erfolgt und/oder das Auslösungsereignis ein optisches und/oder akustisches Signal erzeugt und/oder weiterleitet.

Vorteilhafterweise werden hierdurch Rettungsaktionen für in Not geratene Menschen in erheblichen Maßen verbessert. Insbesondere dadurch, dass Alarme und/oder Information für den Zuständigkeitsbereich zugewiesen werden, kann vorteilhafterweise eine besonders zielorientierte Informationsübermittlung erfolgen. Ferner ist es vorteilhaft, dass vorzugsweise Satelliten und/oder terrestrische Positionsbestimmungseinrichtungen verwandt werden, sodass der Einsatzzweck des Verfahrens sowohl auf Land als auch auf See möglich ist. Weiterhin können vorteilhaft aktuelle und moderne Übertragungstechnologien und Kommunikationsmethoden für einen Informationsaustausch implementiert werden, sodass eine bestmögliche Kommunikation und Hilfeleistung bei Notfallsituationen gewährleistet werden kann.

Ein stationärer KatController bezeichnet bevorzugt einen KatController, der im Wesentlichen ortsfest vorliegt. Ein mobiler KatController bezeichnet bevorzugt hingegen einen KatController, der geführt und damit seinen Ort, d. h. die Position, auch verändern kann. Beide bevorzugte Optionen weisen Vorteile auf. Bei einem stationären KatController kann beispielsweise eine vorteilhafte Erkenntnis über die Position vorliegen, sodass eine zeitaufwendige Berechnung hierfür geringer ausfällt oder entfallen kann. Bei einem mobilen KatController liegt vorteilhaft eine Flexibilität hinsichtlich der Position vor und damit auch ein vielfältigeres Anwendungsfeld. Während stationäre KatController für die Funkabdeckung eines Bereiches definiert werden können, erhöhen mobile KatController die Redundanz und Leistungsfähigkeit der Funkabdeckung. Mit einem bevorzugten zusätzlichen Akku- und/oder Solarbetrieb liegt vorteilhaft eine dauerhafte Funktionsstabilität vor, sodass vorteilhafterweise ein dauerhafter Betrieb möglich ist.

In einer weiteren bevorzugten Ausführungsform ist das Verfahren dadurch gekennzeichnet, dass
a. die KatController Informationen und/oder Steuerungsbefehle über eine Infrastruktur, bevorzugt über ein Mesh-Netzwerk, empfangen und/oder verarbeiten,
b. ein Datensatz zwischen den und/oder zu den KatControllern über ein Übertragungsverfahren versendet wird, das bevorzugt ausgewählt ist aus einer Gruppe umfassend, LoRaWAN, Rundfunk-digital/analog, Satellitenfunk, Kurzwellenfunk, Mobilfunk, LAN und/oder WLAN,
c. mehrere Übertragungsverfahren verwendet werden und/oder die Übertragung verschlüsselt wird,
d. ein Konverter zur Anpassung von Frequenzen und/oder Kanälen verwendet wird und/oder
e. die Übertragung von Chat, Audio und/oder Video bevorzugt in Echtzeitkommunikation, zwischen KatControllern und/oder zwischen KatControllern und anderen Geräten ausgeführt wird.

Mit der Infrastruktur ist bevorzugt die Gesamtheit aller Strukturen gemeint, über die ein Austausch von Informationen und/oder Steuerungsbefehlen ausgeführt werden kann. Ein Mesh-Netzwerk hat sich hierfür als besonders vorteilhaft erwiesen. Ein Mesh-Netzwerk bezeichnet vorzugsweise ein drahtloses lokales Netzwerk aus mehreren Komponenten, das durch Verbindung und gemeinsame Steuerung der Komponenten im "Mesh-Bereich", d. h. in dem Bereich, in der eine Verbindung mit dem Mesh-Netzwerk eingegangen werden kann, befindlichen Endgeräten als ein einheitliches Netzwerk gesehen wird. Vorteilhafterweise werden hierdurch höhere Reichweiten generiert, über die Steuerungsbefehle und/oder Informationen übermittelt werden können, sodass auch eine effektivere Nutzung ermöglicht wird. Des Weiteren ist vorteilhaft eine Beibehaltung einer im Wesentlichen konstanten Übertragungsrate möglich, sodass auch diesbezüglich eine hohe Zuverlässigkeit gegeben ist. Ferner ist vorteilhafterweise ein Mesh-Netzwerk einfach zu installieren und bereitzustellen, sodass kein hoher Aufwand für eine sichere Übertragung von Informationen und/oder Steuerungsbefehlen notwendig ist.

Die genannten bevorzugten Übertragungsverfahren ausgewählt aus einer Gruppe umfassend, LoRaWAN, Digitalfunk, Digitalradio, Satellitenfunk, Richtfunk, Kurzwellenfunk, Mobilfunk, LAN und/oder WLAN haben sich als kostengünstig, energieeffizient und als geeignet in einem weiten Frequenzband erwiesen, sodass vorteilhaft eine hohe Anwendungsbreite im erfindungsgemäßen Kontext erreicht wird. Es kann bevorzugt sein, dass mehrere der genannten bevorzugten Übertragungsverfahren oder eines der bevorzugten genannten Übertragungsverfahren eingesetzt wird. Ferner kann es bevorzugt sein, dass eine Verschlüsselung am Übertragungsverfahren vorgenommen wird, sodass vorteilhaft ein Schutz vor Missbrauch der übermittelten Informationen und/oder Daten ermöglicht wird.

Der Einsatz eines Konverters hat sich dahingehend als vorteilhaft erwiesen, eine Optimierung eines genutzten Frequenzbereiches vornehmen zu können. Hierbei bezeichnet ein Konverter bevorzugt eine Vorrichtung und/oder eine Anlage, mit der eine Frequenz und/oder ein Frequenzbereich und/oder die Übertragungstechnologie während eines Übertragungsverfahrens, wie mittels KatController-Hybrid, verändert werden kann. So kann erfindungsgemäß ein Konverter/Gateway auch dazu dienen, die Reichweite des Systems bspw. Durch Übergang auf autarken Kurzwellen (Daten-) Funk zu erweitern.

Die bevorzugte Übertragung von Chat, Audio und/oder Video ist dahingehend von Vorteil, dass die genannten Optionen für einen Datenaustausch oftmals eingesetzt werden und damit einfach implementiert werden können. Bevorzugt findet dies in Echtzeitkommunikation statt, d. h. insbesondere während einer Kommunikation zwischen den KatControllern und/oder zwischen KatControllern und anderen Geräten. Die Kommunikation bzw. der Austausch erfolgt hierbei in Echtzeit, d. h. sie findet in dem Moment statt, in dem sie auch tatsächlich stattfindet, ohne dass ein weiteres Eingreifen notwendig oder eine Antwort erforderlich ist. Hierdurch wird vorteilhaft eine Verbesserung einer verstärkten Kooperation zwischen KatControllern untereinander erreicht, d. h. eine insgesamt verbesserte Zusammenarbeit der KatController.

In einer weiteren bevorzugten Ausführungsform ist das Verfahren dadurch gekennzeichnet, dass die KatController und/oder Gateways über ein Mesh-Netzwerk betrieben werden, wobei bevorzugt die KatController und/oder Gateways an Gebäuden, Masten, Sirenen, Windkraftanlagen und/oder anderen Anlagen angebracht sind.

Im erfindungsgemäßen Kontext bezeichnet ein Gateway vorzugsweise ein informationstechnisches Verbindungsmittel. Insbesondere kann ein Gateway durch eine Hardware oder eine Software bereitgestellt werden, welche eine Verbindung zwischen zwei Komponenten darstellt. Ferner kann vorteilhaft ein Gateway als Vermittler fungieren, wenn beispielsweise ein anderes Gerät, eine Entität und/oder ein KatController selbst nicht die Information enthält, um einen Verbindungsaufbau bereitzustellen, wodurch der Verbindungsaufbau mittels des Gateways ermöglicht werden kann. Mit anderen Worten ausgedrückt, kann durch das Gateway eine informationstechnische Brücke vorgegeben werden, durch die zwischen mehreren internen Komponenten des Netzwerkes oder auch externen Komponenten außerhalb des Netzwerkes eine Verbindung für einen Datenaustausch bereitgestellt wird.

In einer weiteren bevorzugten Ausführungsform ist das Verfahren dadurch gekennzeichnet, dass
a. KatController ein geografisches Ziel (z. B. einen Punkt, Punkt-Umkreis und/oder Polygon) zur Adressierung einer Nachricht (z. B. eine Meldung, Information, Steuerbefehl, Alarm, etc.) verwenden,
b. dabei optional eine oder mehrere Identifikationskennungen und/oder Klassifizierungen von KatControllern und/oder KatController-Gruppen zur Einschränkung des Nachrichten-Ziels verwendet werden,
c. ein Routing-Algorithmus zur Anwendung kommt, welcher anhand der geografischen Standorte der zuvor passierten KatControllern - mindestens von einem zuvor passierten KatController - und des geografischen Ziels entscheidet, ob und/oder wie die Nachricht weitergeleitet wird.

Der genannte geografische Routing-Algorithmus verhindert vorteilhafterweise eine Überladung bzw. unkontrollierte Ausbreitung im KatKomm-Netz, indem die Weiterleitung der Nachrichten in die korrekte geografische Richtung sichergestellt wird. Mithilfe mindestens eines vorangegangenen Wegpunktes, dem aktuellen Wegpunkt und dem Zielpunkt lassen sich beispielsweise Richtungsvektoren berechnen, welche zur Entscheidung beitragen, ob eine Nachricht weitergeleitet oder verworfen wird.

In einer weiteren bevorzugten Ausführungsform ist das Verfahren dadurch gekennzeichnet, dass
a. die KatController in Geräte und/oder Anzeigeeinrichtungen integriert sind und/oder
b. die KatController Warnungen, Alarme, und/oder Informationen in Form von Text, Audio, Video, Vibration und/oder Grafik in einer Informationsanzeige darstellen.

Vorteilhafterweise können hierdurch hochpräzise Angaben übermittelt und/oder angezeigt werden, die Meldungen über ein Auslöseereignis betreffen. Darüber hinaus können vorteilhaft detailgetreue Warnungen visualisiert und kontinuierlich aktualisiert werden. Die Meldungen können bevorzugt jegliche Informationen über eine Gefahr, eine Naturkatastrophe, einen Unfall etc. darstellen. Solche Meldungen können vorzugsweise manuell oder automatisch erfolgen und/oder durch vorgespeicherte Informationen (Text, Animation, Grafik, Audio, Video) ergänzt werden.

In einer weiteren bevorzugten Ausführungsform ist das Verfahren dadurch gekennzeichnet, dass die KatController mit Entitäten, die bevorzugt ausgewählt sind aus einer Gruppe umfassend Smartphones, Tablets, PCs, Rundfunkgeräte (DAB) und/oder anderen Anzeigesystemen drahtlos, vorzugsweise per Bluetooth, und/oder per Kabel, vorzugsweise mittels USB, HDMI und/oder anderen Steckverbindern, verbunden sind, bzw. in die Entitäten integriert werden.

Die genannten bevorzugten Methoden zur Bereitstellung einer Verbindung zwischen den KatControllern und den Entitäten haben sich bewährt, um eine zuverlässige Datenübertragung vorzunehmen. Insbesondere kann vorteilhaft gesichert werden, dass Daten während der Übertragung nicht verlorengehen und damit auch sensible Informationen stets durch die bevorzugten Verbindungen übermittelt werden können.

In einer weiteren bevorzugten Ausführungsform ist das Verfahren dadurch gekennzeichnet, dass
a. von den Entitäten Warnungen und/oder Alarme ausgelöst und von einem zentralen Alarmierungssystem, bevorzugt MoWaS, übernommen werden, ortsbezogen in einem Server-System aufbereitet und einer Servereinrichtung zur Aussendung der Warnungen und Alarme zugeordnet werden und/oder
b. eine Übertragung von Warnungen zentraler Dienste, bevorzugt MoWaS, über ein Sattelitensystem vom und/oder zum Netzwerk realisiert werden.

Vorteilhafterweise kann hierdurch eine ortsübergreifende Funktionsfähigkeit gewährleistet werden, insbesondere eine besonders weitläufige Funktionsfähigkeit, sodass über besonders entfernte Distanzen eine Übertragung bzw. Aussendung von Warnungen erfolgen kann.

Vorzugsweise bezeichnet ein zentrales Alarmierungssystem ein System, bei denen Personen und/oder Geräte, vorzugsweise von zentraler Stelle/Einrichtung, innerhalb kürzester Zeit alarmiert werden können. Dies kann insbesondere unabhängig von einer eigenen Infrastruktur der Personen und/oder Geräte stattfinden.

Ein besonders vorteilhaftes Alarmierungssystem ist MoWaS (Modulares Warnsystem). MoWaS bezeichnet ein gemeinsam genutztes Warnsystem von Bund und Katastrophenschutzbehörden für die Warnung und Information der Bevölkerung im Zivilschutz und Katastrophenfall sowie bei sonstigen Gefahren für die öffentliche Sicherheit. MoWaS basiert auf der Vorgängerversion SatWaS und ist als Mehrkanalsystem ausgelegt. MoWaS verfügt über ein zentrales Regelwerk sowie eine standardisierte Schnittstelle zu den verschiedenen Warnkanälen. Die Datenübertragung erfolgt vorzugsweise redundant über Satellit. In MoWaS sind bevorzugt alle öffentlich-rechtlichen Rundfunkanstalten und ein Großteil der privaten Medienhäuser, Internet- und Pagingdienste, Apps sowie die Deutsche Bahn als Warnmultiplikatoren integriert.

In einer weiteren bevorzugten Ausführungsform ist das Verfahren dadurch gekennzeichnet, dass
a. KatController in Anzeigesysteme, wie z.B. Digital Signage oder Leuchttafeln, integriert sind,
b. die Anzeigesysteme im Katastrophenfall statt der normalen Anzeige, Katastrophenrelevante Informationen angezeigen,
c. optional Geräte, wie Smartphone oder Tablet etc., eine Funkverbindung (WLAN, Bluetooth, NFC, etc.) zum Anzeigesystem und/oder dem KatController herstellen können und darüber auf die Informationen zugreifen können.

In einer weiteren bevorzugten Ausführungsform ist das Verfahren dadurch gekennzeichnet, dass die KatController in Fahrzeuge, vorzugsweise wie Land-, Wasser- und/oder Luftfahrzeuge, installiert werden, sodass Warnungen empfangen und bei einem manuellen oder automatischen Auslösungsereignis eine geografische Position und Fahrzeugdaten an eine zuständige Leitstelle übermitteln.

Vorteilhafterweise können damit auch zuverlässige Meldungen und/oder Ermittlungen von Notfallsituationen an und/oder von sich bewegenden Geräten, insbesondere Fortbewegungsmittel, erfolgen. Insbesondere kann vorteilhafterweise eine kontinuierliche Übermittlung an und/oder von sich bewegenden, d. h. von ihrer Position veränderlichen Geräten, eine Warnung empfangen und/oder versendet werden. Durch das frühzeitige Empfangen und/oder Versenden von Gefahrenmeldungen kann vorteilhaft rechtzeitig auf Gefahren reagiert werden, sodass Unfälle mit einer höheren Wahrscheinlichkeit verhindert werden können. Vorteilhaft ist hierbei auch, dass eine Warnung an Fortbewegungsmittel, welche sich in der Nähe der Notfallsituation und/oder zum Unfallort befinden und einen KatController aufweisen oder mit einem KatController verbunden sind, Meldungen generiert und/oder versendet werden können. Dies führt vorteilhaft dazu, dass die in der Umgebung befindlichen Insassen eines Fortbewegungsmittels ebenfalls schnell gewarnt werden und auch Hilfe leisten können.

In einer weiteren bevorzugten Ausführungsform ist das Verfahren dadurch gekennzeichnet, dass
a. KatController Sirenen mittels Ausgangssignalen ansteuern und eine Auslösebestätigung zurücksenden,
b. KatController die Sirenen über ein Daten-Netzwerk, vorzugsweise ein Mesh-Netzwerk, verbinden.

Bevorzugt können die KatController mit optischen Sirenen, welche als Signalleuchten fungieren, mit akustischen Sirenen und/oder separat an jeglichen anderen Orten und/oder Geräten, z. B. Straßenlaternen, verbunden werden. Insbesondere kann es bevorzugt sein, dass eine optische Sirene über eine Sirenensteuerung eine akustische Sirene auslöst. Vorteilhaft können hierdurch mehrere Warnsignale zur Informationsübermittlung genutzt werden. Des Weiteren kann vorteilhaft eine Redundanz der verschiedenen Arten von Warnsignalen genutzt werden, sodass vorteilhafterweise beim Ausfall einer Sirene oder einer Signalart auf eine andere Option der Warnübermittlung zurückgegriffen werden kann.

In einer weiteren bevorzugten Ausführungsform ist das Verfahren dadurch gekennzeichnet, dass KatController in Entitäten, bevorzugt in Smartphones, Tablets und/oder PCs, über eine installierte App den Standort ermitteln und/oder Informationen anzeigen.

Im Sinne der Erfindung umfasst der Standort Daten, welche Angaben zur geografischen Position und/oder allgemeine Angaben betreffen. Die Standortdaten können beispielsweise anhand eines GPS-Signals, einer Mobilfunkverbindung und/oder einer WLAN-Verbindung erhalten werden, ohne auf diese beispielhaften Verbindungsoptionen eingeschränkt zu sein. Mittels der bevorzugt genannten Entitäten kann vorteilhafterweise der Standort und/oder Informationen, insbesondere über den Standort selbst, besonders ermitteln und/oder anzeigen. Auch die genannten bevorzugten Verbindungsoptionen für eine Übertragung der entsprechenden Daten lässt mit den bevorzugten Entitäten einfach und mit bewährten Mitteln bereitstellen.

In einer weiteren bevorzugten Ausführungsform ist das System dadurch gekennzeichnet, dass
a. KatController dazu eingerichtet sind, in Entitäten, wie Smartphones, Tablets und PCs, z.B. über eine installierte App integriert zu sein und den Standort zu ermitteln und Informationen anzuzeigen sowie, bei Erfüllung notwendiger Voraussetzungen im Betriebssystem der jeweiligen Entität, bei der Benutzung im Flugmodus aktiv zu bleiben,
b. KatController dazu eingerichtet sind, an Pager georeferenzierte Meldungen und Informationen zu senden und Rückinformationen zu empfangen,
c. KatController dazu eingerichtet sind, an Fahrzeuge mit KatController Informationen und Warnungen zu senden und untereinander auszutauschen.

In einer weiteren bevorzugten Ausführungsform ist das Verfahren dadurch gekennzeichnet, dass
a. die KatController, vorzugsweise über eine verbundene App und/oder eine verbundene Auslöse/Eingabe-Vorrichtung, ein Ortungssignal auslösen und Ortungsdaten empfangen,
b. KatController ein Ortungssignal empfangen und Ortungsdaten, bevorzugt Standortdaten und/oder Kategoriedaten, aussenden,
c. vorzugsweise eine Ortung für den Ortungsbereich durch eine Leitstelle und/oder Rettungskräften ausgelöst wird, wobei bevorzugt bei fehlender Verbindung der Leitstelle zum Ortungsbereich das Ortungssignal vor Ort ausgelöst wird.

Ein Ortungssignal bezeichnet bevorzugt ein Signal, das Informationen über die Position bzw. den Standort umfasst. Ein Ortungssignal kann bevorzugt auch eine Bitfolge umfassen, beispielsweise in Form eines Hinweises, der zum Ausdruck bringt, dass eine Notfallsituation eingetreten ist. So kann es sich beispielsweise bei dem Ortungssignal um einen Morsecode handeln. Das Ortungssignal kann vorzugsweise analysiert und/oder angepeilt werden, um eine Position ermitteln zu können. Ortungsdaten bezeichnen bevorzugt Daten, welche aus dem Ortungssignal herausgelesen und/oder extrahiert werden können. Eine Auslösevorrichtung bezeichnet bevorzugt eine Vorrichtung, mit der ein Ortungssignal ausgelöst, d. h. insbesondere versendet werden kann. Auch mittels einer Eingabevorrichtung ist dies möglich, wobei vorzugsweise bei einer Eingabevorrichtung vor der Auslösung eines Ortungssignals eine Eingabe an der Vorrichtung stattzufinden hat, um das Auslösen des Ortungssignals ermöglichen zu können.

Eine Leitstelle, Einsatzleitstelle oder PSAP (engl.: Public safety answering point) ist erfindungsgemäß bevorzugt dazu eingerichtet, den Einsatzbetrieb einer zugeordneten Organisationen zu leiten. Sie nimmt bevorzugt Informationen entgegen, wertet sie aus und koordiniert die angeschlossenen Dienste. Insbesondere im Rahmen der öffentlichen Daseinsvorsorge bestehen Leitstellen, die zur Brandbekämpfung, zur Erhaltung bzw. Rettung bedeutender Sachwerte, für den Katastrophenschutz, im medizinischen und technischen Rettungsdienst, zur Rettung von Menschenleben, in Belangen öffentlicher Sicherheit und Ordnung Notrufe entgegennehmen und Rettungsdienst, Feuerwehr, Technisches Hilfswerk, Polizei und andere Notfalldienste einsetzen. Sie sind in der Regel rund um die Uhr erreichbar und stehen untereinander mittels Telefon, Funk und im Sinne der Erfindung besonders stark bevorzugt auch mit Datenleitungen in Verbindung. In ganz Europa ist unter der Notrufnummer 112 ein Ansprechpartner erreichbar, der Hilfe aus den genannten Bereichen vermittelt.

Vorteilhafterweise wird es ermöglicht, dass essentielle Daten für eine Rettungsaktion, insbesondere in Bezug auf Daten, die eine Ermittlung der geographischen Position zulassen, an entsprechende Leitstellen gelangen können, ohne dass hohe Rechen- und/oder Speicherkapazitäten benötigt werden. Darüber hinaus können relevante Informationen vorteilhafterweise an eine Mehrzahl an Leitstellen übermittelt werden, sodass eine besonders gelungene Hilfeleistung ermöglicht werden kann.

In einer weiteren bevorzugten Ausführungsform ist das Verfahren dadurch gekennzeichnet, dass
a. KatController Notrufe an eine zuständige Leitstelle übermitteln, vorzugsweise indem ein Sender eine verbundene App und/oder eine verbundene Auslöse/Eingabe-Vorrichtung verwendet,
b. die KatController dazu eingerichtet sind, Notrufe an eine zuständige Leitstelle zu übermitteln, indem der Sender vorzugsweise eine verbundene Auslöse/EingabeVorrichtung verwendet,
c. die KatController dazu eingerichtet sind, Notrufe an eine zuständige Leitstelle zu übermitteln, indem insbesondere Menschen mit Sehbehinderung Informationen per Speech-to-Text-to-Speech übermitteln können, wobei die dabei generierte Textnachricht zur Kontrolle als Audio ausgegeben wird und korrigiert werden kann,
d. die KatController dazu eingerichtet sind, Alarme und Notrufe an zuständige Pager und/oder Leitstelle zu übermitteln, wobei der Alarm oder Notruf durch einen Sensor, vorzugsweise durch einen Erschütterungssensor, Feuchtigkeitssensor und/oder Temperatursensor, ausgelöst wird und/oder
e. die KatController bei einem Notruf die Standortdaten und/oder weitere Informationen übermitteln.

Ein Sender bezeichnet bevorzugt eine Einheit, mit der ein Aussenden von Daten ausgeführt werden kann. Der Sender kann bevorzugt auch als eine Kommunikationseinheit vorliegen. Ferner kann es bevorzugt sein, dass der Sender als eine Hardware oder als eine Software vorliegt. Der Sender kann bevorzugt eine Verbindung zu einer Auslöse-/Eingabevorrichtung aufweisen. Die Verbindung kann bevorzugt ausgesucht sein aus einer Gruppe umfassend, GPRS, EDGE, UMTS, LTE, WiMAX, LTE-Advance und/oder 5G. Auch Verbindungen über LoRaWAN, WLAN, Kurzwellenfunk und/oder Satellitenzugang sind möglich.

Mittels der bevorzugt genannten Sensoren, auf deren Basis ein Notruf ausgelöst werden kann, können vorteilhafterweise Indikatoren, wie z. B. Erschütterungen, Temperaturvariationen wie Temperaturerhöhungen und/oder Temperaturverringerungen und/oder Wasseranteile, gemessen werden, die auf eine Notfallsituation hindeuten. Ferner ist es mittels der bevorzugten Sensoren vorteilhafterweise möglich, eine kontinuierliche Überwachung der Parameter vorzunehmen, die erfasst werden sollen. Vorteilhaft kann nach der Erfassung der Parameter eine automatisierte Übertragung an die entsprechende Leitstelle erfolgen, wenn ein Wert gemessen wurde, der beispielsweise von einem zuvor festgelegten Normwert oder Normbereich abweicht, um eine genaue Zuordnung zu einer Notfallsituation angeben zu können. Ferner kann es durch die gemessenen Parameter ermöglicht werden, neben der kontinuierlichen Überwachung eine vollautomatisierte Übermittelung an eine Leitstelle vornehmen zu können, sodass eine schnellere Hilfeleistung bereitgestellt werden kann.

In einer weiteren bevorzugten Ausführungsform ist das Verfahren dadurch gekennzeichnet, dass bei einem Notruf über einen KatController ein in der Nähe befindlicher Ersthelfer informiert wird, wobei dies bevorzugt automatisch und/oder durch Steuerung von einer Leitstelle und/oder einer anderen zuständigen Einrichtung geschieht.

Vorteilhafterweise können durch die Benachrichtigung eines Ersthelfers schnell und zuverlässig einleitende Maßnahmen für eine solide Hilfeleistung getroffen werden. Insbesondere können bereits auch schon erste lebenserhaltende Maßnahmen eingeleitet werden, welche in einigen Notfallsituationen entscheidend sein können, ob ein Mensch die Notfallsituation überlebt oder nicht. Die Benachrichtigung eines Ersthelfers kann bevorzugt automatisch und/oder durch die Steuerung von einer Leitstelle und/oder einer anderen zuständigen Einrichtung erfolgen. Die andere zuständige Einrichtung kann beispielsweise eine Einrichtung sein, die dazu ausgelegt ist, Ersthelfer, die sich in hinreichender Nähe zu einer Notfallsituation befinden, entsprechend zu informieren, damit diese die notwendige Hilfe leisten können.

In einer weiteren bevorzugten Ausführungsform ist das Verfahren dadurch gekennzeichnet, dass
a. eine Übertragung von Warnungen, Alarmierungen, Informationen und/oder Notrufe über landestypische Funkfrequenzen erfolgt,
b. die landestypischen Frequenzen anhand der Positionsdaten des aktiven KatControllers ermittelt werden und/oder
c. eine eventuell notwendige Anpassung einer Antenne und/oder einer Sendeleistung auf eine eingestellte Frequenz automatisch und/oder manuell erfolgt.

Mit landestypischen Frequenzen sind bevorzugt Frequenzen und/oder Frequenzbereiche gemeint, die einem Frequenzband zugeordnet werden können, über das vorzugsweise Funksignale übermittelt werden können und in Ländern und/oder Regionen üblich sind. Das Land kann beispielsweise ein Bundesland oder ein eigener Staat sein. Vorteilhafterweise wird hierdurch auf eine bereits vorhandene Ressource zur Informationsübermittlung zurückgegriffen, die dadurch effizienter ausgestaltet werden kann. Der aktive KatController bezeichnet hierbei bevorzugt den KatController, der aktuell aktiv bei der Übermittlung der Warnungen, Alarmierungen, Informationen und/oder Notrufe beteiligt ist. Durch die bevorzugte Anpassung einer Frequenz kann vorteilhaft erreicht werden, dass eine Übermittlung bzw. Übertragung in einem bestimmten Frequenzband erfolgt, sodass hierdurch eine Flexibilität für die Nutzung gewünschter Frequenzen erreicht wird.

In einer weiteren bevorzugten Ausführungsform ist das Verfahren dadurch gekennzeichnet, dass
a. Warnungen im Webinterface einer KatController-Leitstelle und Webinterface der KatController-Katastrophenschutz eingegeben werden und von den KatControllern im Netzwerk weitergeleitet werden,
b. die Warnungen vom Webinterface der KatController-Leitstelle und Webinterface des KatController-Katastrophenschutz angezeigt werden und/oder
c. zusätzlich eine API des Webinterface der KatController-Leitstelle zur Kommunikation und Steuerung des KatControllers auch durch z.B. eine Leitstellensoftware realisiert werden kann.

Das Webinterface bezeichnet bevorzugt eine graphische Benutzeroberfläche, d. h. eine Schnittschnelle zur jeweiligen Komponente des erfindungsgemäßen Kontextes. Die KatController umfassend KatController-Leitstelle und KatController-Katastrophenschutz bezeichnen KatController, die entsprechend als Leitstelle und Katastrophenschutz fungieren oder über die die Leitstelle und der Katastrophenschutz eine Datenübermittlung bzw. Datenweiterleitung vollführen kann.

Eine API (Application Programming Interface) bezeichnet bevorzugt eine Programmierschnittstelle, der als virtueller Mittelsmann fungiert. Hierdurch können Informationen der KatController-Leitstelle zur Kommunikation und Steuerung des KatControllers durch die Leitstellensoftware verwendet werden. Die Leitstellensoftware bezeichnet bevorzugt eine Software, welche die Leitstelle aufweist, um eine entsprechende Funktionsfähigkeit vorweisen zu können.

In einer weiteren bevorzugten Ausführungsform ist das Verfahren dadurch gekennzeichnet, dass
a. KatController einen WLAN-Hotspot bereitstellen, zu dem sich im Umkreis befindende Geräte verbinden können, um Informationen zu erhalten und/oder zu geben,
b. bei bestehender WLAN-Verbindung jeder Verbindungsaufbau durch einen Internet-Browser zu den Seiten des KatController-HotSpots geleitet wird,
c. alternativ eine Verbindung über einen anderen Funkstandard, wie z.B. Bluetooth oder NFC zum KatController aufgebaut werden kann, um Informationen zu erhalten und/oder zu geben,
d. über eine bestehende Verbindung zum KatController Funktionen, wie z.B. ein Notruf ausgelöst werden können.

In einer weiteren bevorzugten Ausführungsform ist das Verfahren dadurch gekennzeichnet, das eine Kommunikation zwischen Katastrophenschutzeinrichtungen über das Netzwerk ausgeführt wird.

Eine Katastrophenschutzeinrichtung bezeichnet bevorzugt eine Einrichtung, welche dazu dient, Maßnahmen einzuleiten, um Menschen und/oder die Umwelt bei einem Katastrophenfall, insbesondere bei einer Notfallsituationen, Schutz zu gewähren. Durch eine Verbindung von Katastrophenschutzeinrichtungen über das Netzwerk, welches auch insbesondere der Verbindung der KatController untereinander dient, kann vorteilhafterweise eine zuverlässige Datenverbindung gewährleistet werden. Insbesondere kann eine Kommunikation zwischen mehreren Katastrophenschutzeinrichtungen stattfinden und das Risiko dabei minimiert werden, dass relevante Informationen, welche insbesondere für die Hilfeleistung als solche wesentlich sein könnten, verlorengehen.

In einer weiteren bevorzugten Ausführungsform ist das Verfahren dadurch gekennzeichnet, dass KatController von Gefahrenmeldeanlagen und/oder Sensoren Alarme an eine zuständige Leitstelle übermitteln.

Gefahrenmeldeanlagen bezeichnen bevorzugt Vorrichtungen, welche dazu ausgelegt sind, Gefahren selbstständig zu erkennen und/oder Eingaben zur Gefahrenerkennung zu verarbeiten. Gefahrenmeldeanlagen sind in einer Vielzahl von Applikationen eingebaut bzw. integriert. Vorteilhafterweise kann hierdurch eine besonders schnelle und zuverlässige Gefahrenerkennung erfolgen, um eine Informationsübermittlung an eine Leitstelle ermöglichen zu können.

In einer weiteren bevorzugten Ausführungsform ist das Verfahren dadurch gekennzeichnet, dass pulsierende Leuchtsignale festgelegte Informationen beinhalten, welche mittels eines optischen Empfängers decodiert als Grafik und/oder Text angezeigt und/oder als Audio ausgegeben werden.

Vorteilhafterweise werden hierdurch vielfältige Möglichkeiten zur Übermittlung von Informationen, insbesondere von Warnsignalen, bereitgestellt. Insbesondere kann ein besonders umfassender Personenkreis hierdurch die Hinweise auf eine Gefahrensituation erkennen. So können beispielsweise Menschen mit einer Sehschwäche oder Sehbehinderung durch eine entsprechende Audioausgabe über die Situation informiert werden. Des Weiteren können vorteilhaft auch Menschen, die eine Hörschwäche oder Hörbehinderung haben, über die pulsierenden Leuchtsignale oder vibrierende Empfangsgeräte deutlich darauf hingewiesen werden, dass eine Situation eingetreten ist, die eine Gefahr für sie birgt. Insgesamt wird vorteilhaft eine besonders klare Übermittlung zur Erkennung von potentiell gefährlichen Situationen und/oder bereits eingetroffenen Notfällen ermöglicht.

In einer weiteren bevorzugten Ausführungsform ist das Verfahren dadurch gekennzeichnet, dass ein Zustand des Netzwerks über eine Betriebsüberwachung erfasst und/oder überwacht wird.

Die Betriebsüberwachung kann bevorzugt durch eine dazu konfigurierte Software und/oder Hardware erfolgen. Vorteilhaft kann mittels der Betriebsüberwachung gesichert werden, dass die Gefahr eines Ausfalls des Netzwerkes verringert oder vermieden wird. Insbesondere wird hierdurch eine langanhaltende, robuste und insbesondere auch dauerhafte Bereitstellung des Netzwerkes ermöglicht, sodass eine beständige Verfügbarkeit gegeben ist.

In einer weiteren bevorzugten Ausführungsform ist das Verfahren dadurch gekennzeichnet, dass das KatKomm-Netz oder ein zusätzliches Netzwerk für private und/oder kommerzielle Kommunikation und/oder Steuerung verwendet wird.

In einem weiteren Aspekt betrifft die Erfindung ein System zur Warnung, Kommunikation und Notrufsteuerung in autarken Netzen dadurch gekennzeichnet, dass das System mindestens zwei KatController umfasst, die als Sende- und Empfangseinrichtung untereinander als Knotenpunkte verbunden sind, wobei das System dazu konfiguriert ist, ein Verfahren nach dem obig Beschriebenen auszuführen.

Der durchschnittliche Fachmann erkennt, dass technische Merkmale, Definitionen und Vorteile des obig beschriebenen Verfahrens, insbesondere von bevorzugten Ausführungsformen des Verfahrens, auch für das erfindungsgemäße System gelten und umgekehrt.

In einem weiteren Aspekt betrifft die Erfindung ein Computerprogrammprodukt zur Warnung, Kommunikation und Notrufsteuerung in autarken Netzen, dadurch gekennzeichnet, dass das Computerprogrammprodukt dazu eingerichtet ist, folgende Schritte auszuführen:
a. Bereitstellung einer Datenverbindung zu mindestens einem KatController,
b. Erzeugung von einem Datensatz mit Steuerungsbefehlen und Übermittlung an den KatController, wobei die Steuerungsbefehle einem KatController, einer Gruppe von KatControllern und/oder einem geografischen Bereich zugeordnet sind,
c. Eingabe eines Nutzers über ein Webinterface, eine Schnittstelle und/oder automatisiert über einen Algorithmus, sodass die Steuerungsbefehle sowie den KatController und/oder geografischen Bereich anhand eines Auslösungsereignisses ausgewählt werden.

Der durchschnittliche Fachmann erkennt, dass technische Merkmale, Definitionen und Vorteile des obig beschriebenen Verfahrens und Systems, insbesondere von bevorzugten Ausführungsformen des Verfahrens und Systems, auch für das erfindungsgemäße Computerprogrammprodukt gelten und umgekehrt.

Im Folgenden soll die Erfindung anhand von Figuren näher erläutert werden, ohne auf diese beschränkt zu sein.

### Figuren

### Kurzbeschreibung der Abbildungen

- **Fig.1**: Schematische Darstellung einer bevorzugten Ausführungsform des erfindungsgemäßen Systems bzw. Verfahrens
- **Fig.2**: Schematische Darstellung eines bevorzugten KatControllers
- **Fig.3**: Schematische Darstellung einer bevorzugten KatController-Sirene
- **Fig.4**: Schematische Darstellung eines bevorzugten KatKomm-Netz-intern

### Detaillierte Beschreibung der Abbildungen

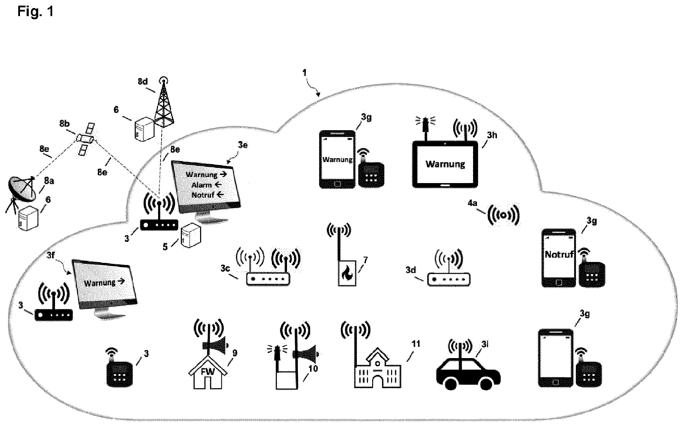

Fig.1 illustriert eine bevorzugte Ausführungsform des erfindungsgemäßen Systems zur Warnung, Alarmierung und Notrufsteuerung innerhalb eines Netzwerkes (KatKomm-Netz) **1,** welches geeignet ist, um ein erfindungsgemäßes Verfahren auszuführen. Hierbei ist eine erste Entität einer Leitstelle **3e** zugeordnet. Das heißt, die Leitstelle **3e** weist bevorzugt eine Entität, wie einen PC auf. Diese Entität ist bevorzugt dazu eingerichtet, Steuerungsbefehle für Smartphone mit KatController **3** und/oder KatController-Sirene **3a** und/oder weitere Arten von KatController **3g**, manuell durch eine Person und/oder automatisiert zu generieren und Notrufe zu empfangen. Eine zweite Entität ist dem Katastrophenschutz **3f** zugeordnet, um Steuerungsbefehle für Smartphone mit KatController **3g** und/oder weitere Arten von KatController, für Warnungen, Alarmierung und Informationen zu generieren. Über verbundene externe Servereinrichtungen **6,** wie MoWaS oder Wetterdienst, können Warnungen und Alarmierungen in das System zur Auslösung übernommen werden. Die KatController **3b**, **3c** und **3d** ermöglichen die Anpassung verschiedener Übertragungsverfahren an das KatKomm-Netz 1.

Die Entitäten Leitstelle **3e** und Katastrophenschutz **3f** sind über das Übertragungsnetz **8e** mit der externen Servereinrichtung **6** verbunden und dienen der Aussendung der Warnungen, Alarmierungen und Informationen sowie dem Empfang der Notrufe.

Die Entitäten mit KatController 3, wie Sirenenstandorte **9,** Sirenenstandort mit KatController und Signalleuchte **10** und Gebäude **11** bilden die Basis für das Mesh-Netzwerk. Dieses bietet die Vermaschung zahlreicher Knotenpunkte, auch unter Einbeziehung der Smartphones mit KatController **3g**. Zwischen diesen Knotenpunkten herrscht periodische Kommunikation, somit sind alle Knotenpunkte gleichzeitig Empfänger und Sender. Der jeweils beste Weg von einem Sender zu einem Empfänger wird dynamisch bestimmt. Fällt ein Knotenpunkt aus, so wird der nächstbeste Weg zum Ziel genommen. Die Entitäten sind beispielweise über Bluetooth **4e** mit KatController **3g, 3h, 3j** verbunden und ständig empfangsbereit, um die für sie relevanten Informationen und Steuerungsbefehle ortsbezogen auszuwerten und entsprechend ihrer Ausstattung anzuzeigen und Signale, wie an Sirenenstandorten **9, 10** und **3h** auszulösen. Optischen Sirenen **10, 3h,** als Signalleuchte, können an akustischen Sirenen, als auch separat an jeglichen anderen Standorten, wie Straßenlaternen, eingesetzt werden. Ein Smartphone **3g** mit KatController und Fahrzeuge mit KatController **3i** können in Zusammenwirken mit einer App und/oder eine in das Fahrzeug integrierte Einrichtung einen Notruf-Datensatz an die zuständige Leitstelle **3e** übermitteln. Gefahrenmeldeanlagen **7** und Sensoren **4a** übermitteln automatisch Alarme und Informationen an die zuständige Leitstelle **3e.**

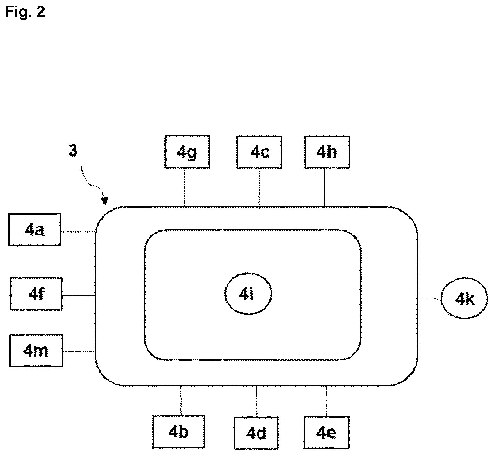

Fig. 2 stellt schematisch einen bevorzugten KatController **3** für den Empfang der Steuerungsbefehle dar. Mit der Positionsbestimmungseinrichtung **4m** und der Antenne **4f** werden die entsprechenden Funkverbindungen hergestellt. Mit dem Akku **4b** wird eine ausfallsichere Spannungsversorgung bereitgestellt, wobei der Zustand durch die Spannungsanzeige **4c** dargestellt wird. Funktionstaste **4g** und Betriebsanzeige **4h** ermöglichen die Bedienung und Anzeige des Betriebszustandes. Ein Signalgeber **4k** macht akustisch auf eingehende Warnungen, Alarme und Informationen aufmerksam, die am Display **4j** als Symbole und/oder Text angezeigt werden. Ein USB-Anschluss **4d** ermöglicht das Aufladen des Akkus und/oder den Anschluss einer Ersatzstromversorgung. Über Bluetooth **4e** wird die Kommunikation mit einer App ermöglicht. Sensoren **4a** wie z. B. bei Erschütterungen, Feuchtigkeit-, Temperatur-Abweichungen dienen der Auslösung eines Notrufes an die zuständige Leitstelle **3e.**

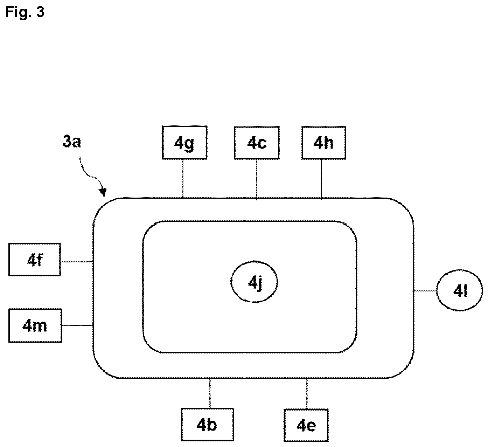

Fig. 3 stellt schematisch eine bevorzugten KatController-Sirene 3a für den Empfang der Steuerungsbefehle für akustische Sirenen und Leuchtsignale dar. Mit der Positionsbestimmungseinrichtung **4m** und der Antenne **4f** werden die entsprechenden Funkverbindungen hergestellt. Alternativ können zur Positionsbestimmungseinrichtung **4m** die Positionsdaten in der KatController-Sirene **3a** gespeichert werden. Mit dem Akku **4b** wird die ausfallsichere Spannungsversorgung gewährleistet, wobei der Zustand durch die optionale Spannungsanzeige **4c** dargestellt wird. Eine Funktionstaste **4g** und Betriebsanzeige **4h** ermöglichen die Bedienung und Anzeige des Betriebszustandes. Über beispielweise Bluetooth **4e** wird die Kommunikation mit einer App ermöglicht. Eingehende Alarme werden an die LED **4j** angezeigt. Die Steuerung der Sirene erfolgt über das Ausgangssignal **41** für akustische Sirenen und Leuchtsignale **10.**

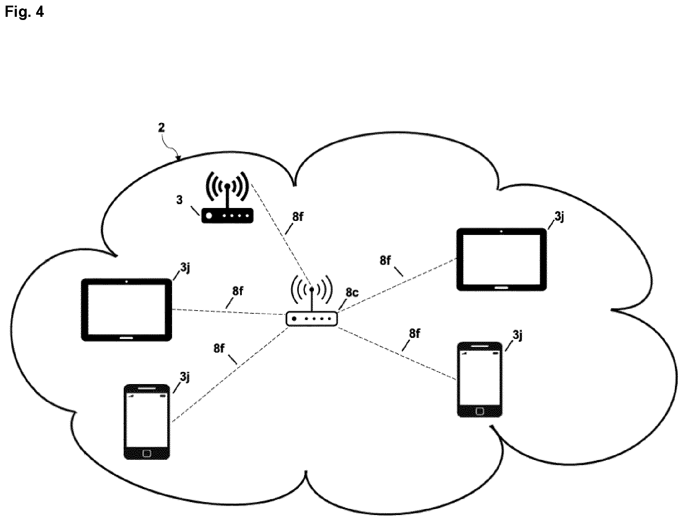

Fig. 4 stellt schematisch einen bevorzugtes KatKomm-Netz-intern **2** dar. Dieses ermöglicht die Kommunikation innerhalb einer Organisation, vorzugsweise zwischen den Katastrophenschutzeinrichtungen. Eine Funkvermittlung bzw. ein Router **8c** verbindet Smartphone, Tablet mit App, PC **3j** zum KatKomm-Netz **1.** Als Übertragungswege stehen insbesondere WLAN, Bluetooth **4e,** LAN **8f** zur Verfügung.

### Bezugszeichenliste

- 1: KatKomm-Netz (Netzwerk mit KatControllern)
- 2: KatKomm-Netz intern
- 3: KatController
- 3a: KatController-Sirene
- 3b: KatController-Digitalfunk, Digitalradio, Rundfunk
- 3c: KatController-Hybrid
- 3d: KatController-Konverter
- 3e: Webinterface des KatController-Leitstelle (Warnung, Alarm, Notruf)
- 3f: Webinterface des KatController-Katastrophenschutz (Warnung)
- 3g: Smartphone, Tablet, Pager mit KatController
- 3h: Anzeigesystem und Signalleuchte mit KatController
- 3i: Fahrzeug mit KatController
- 3j: Smartphone, Tablet mit App, PC
- 4a: Sensor
- 4b: Akku
- 4c: Spannungsanzeige
- 4d: USB
- 4e: Bluetooth
- 4f: Antenne
- 4g: Funktionstaste
- 4h: Betriebsanzeige
- 4i: Display
- 4j: LED
- 4k: Signalgeber
- 4l: Ausgangssignal
- 4m: Positionsbestimmungseinrichtung
- 5: Betriebsüberwachung
- 6: Servereinrichtung extern
- 7: Gefahrenmeldeanlage
- 8a: Satellitenstation
- 8b: Satellit
- 8c: Funkvermittlung/Router
- 8d: Digitalfunk, Digitalradio, Rundfunk, Kurzwellenfunk
- 8e: Übertragungsnetz
- 8f: WLAN, Bluetooth, LAN
- 9: Sirenenstandort mit KatController
- 10: Sirenenstandort mit KatController und Signalleuchte
- 11: Gebäude mit KatController

## Patentansprüche

1. Verfahren zur Warnung, Kommunikation und Notrufsteuerung in autarken Netzen umfassend folgende Schritte:
a. Bereitstellen eines Netzwerks (1) umfassend KatController (3), wobei die KatController (3) mit Entitäten verbunden sind,
b. verarbeiten von Auslöseereignissen von den Entitäten, den KatControllern (3) und/oder von externen Quellen,
c. senden von Steuerungsbefehlen ausgehend von den Entitäten auf Basis eines Auslöseereignisses, wobei die Steuerungsbefehle anhand des Auslöseereignisses ausgewählt werden und KatController (3) und/oder geographischen Bereichen zugeordnet werden,
d. abrufen der zugeordneten Steuerungsbefehle von den KatControllern (3) und erzeugen eines Signales / einer Ausgabe aufgrund der Steuerungsbefehle,
e. empfangen und/oder versenden von Steuerungsbefehlen als eine Einzeladressierung, Gruppenadressierung und/oder Bereichsadressierung und/oder Fernadressierung.

2. Verfahren nach dem vorherigen Anspruch
**dadurch gekennzeichnet, dass**
a. das Senden von Steuerungsbefehlen durch die Erzeugung, Übermittlung und/oder Auswertung eines Datensatzes ergänzt wird oder diesen umfasst,
b. wobei bevorzugt der Datensatz eine Adresse als einen geografischen Bereich in Form eines Polygons, Punktes und/oder oder Kreises (Punkt, Radius) und/oder Daten zur Klassifizierung umfasst,
c. wobei bevorzugt der Datensatz alternativ eine ID eines bestimmten KatControllers (3) und/oder einer Gruppe von KatControllern (3) und weitere Informationen enthält; sodass vorzugsweise eine örtliche Zuordnung der Warnung zu KatControllern (3) anhand des geografischen Bereichs und/oder anhand der ID des KatControllers (3) und/oder der Gruppe von KatControllern (3) erfolgt;
d. wobei bevorzugt der Datensatz von den KatControllern (3) empfangen, versendet und/oder ausgewertet wird,
e. wobei bevorzugt der Datensatz optisch und/oder akustisch angezeigt wird.

3. Verfahren nach einem oder beiden der vorherigen Ansprüche
**dadurch gekennzeichnet, dass**
a. die Entitäten vom Bund, Land, Katastrophenschutzeinrichtungen, Kommunen Leitstellen (3e) und/oder Feuerwehren nach einer Authentifizierung betrieben und/oder Warnungen, Alarme und/oder Informationen für ihren Zuständigkeitsbereich auslösen und/oder bereitgestellt werden und/oder
b. die KatController (3) stationär und/oder mobil, bevorzugt mit einem zusätzlichen Akku- und/oder Solarbetrieb, verwendet und die Signale und/oder andere Informationen verarbeitetet und/oder ausgegeben werden, wobei eine Ermittlung der geografischen Position mittels einer Satelliten- und/oder terrestrischer Positionsbestimmungseinrichtung (4m) erfolgt und das Auslösungsereignis ein optisches und/oder akustisches Signal erzeugt und/oder weiterleitet.

4. Verfahren nach einem oder mehreren der vorherigen Ansprüche
**dadurch gekennzeichnet, dass**
a. die KatController (3) Informationen und/oder Steuerungsbefehle über eine Infrastruktur, bevorzugt über ein Mesh-Netzwerk mit KatController (3), empfangen und/oder verarbeiten;
b. ein Datensatz zwischen den und/oder zu den KatControllern (3) über ein Übertragungsverfahren versendet wird, das bevorzugt ausgewählt ist aus einer Gruppe umfassend, LoRaWAN, Digitalfunk, Rundfunk (8d), Satellitenfunk (8a), Richtfunk, Kurzwellenfunk (8d), Mobilfunk, LAN und/oder WLAN (8f),
c. mehrere Übertragungsverfahren verwendet werden und/oder die Übertragung verschlüsselt wird,
d. die Übertragung von Chat, Audio und/oder Video, bevorzugt in Echtzeitkommunikation, zwischen KatControllern (3) und/oder zwischen KatControllern (3) und anderen Geräten ausgeführt wird.

5. Verfahren nach einem oder mehreren der vorherigen Ansprüche
**dadurch gekennzeichnet, dass**
KatController (3) und/oder Gateways über ein Mesh-Netzwerk betrieben werden, wobei diese bevorzugt an Gebäuden, Masten, Sirenen, Windkraftanlagen und/oder anderen Anlagen angebracht sind.

6. Verfahren nach einem oder mehreren der vorherigen Ansprüche
**dadurch gekennzeichnet, dass**
a. die KatController (3) in verschiedenen Geräte und/oder Anzeigeeinrichtungen integriert sind und/oder
b. die KatController (3) Warnungen, Alarme, und/oder Informationen in Form von Text, Audio, Video, Vibration und/oder Grafik in einer Informationsanzeige darstellen.

7. Verfahren nach einem oder mehreren der vorherigen Ansprüche
**dadurch gekennzeichnet, dass**
a. die KatController (3) mit Entitäten, die bevorzugt ausgewählt sind aus einer Gruppe umfassend Smartphones, Tablets, PCs (3j) und/oder anderen Anzeigesystemen (3h) drahtlos, vorzugsweise per WLAN, Bluetooth (8f), NFC und/oder per Kabel, vorzugsweise mittels USB (4d), HDMI und/oder anderen Steckverbindern, verbunden sind und/oder
b. KatController (3) in Entitäten, bevorzugt in Smartphones, Tablets und/oder PCs (3j), insbesondere über eine installierte App den Standort ermitteln und/oder Informationen anzeigen.

8. Verfahren nach einem oder mehreren der vorherigen Ansprüche
**dadurch gekennzeichnet, dass**
a. von den Entitäten Warnungen und/oder Alarme ausgelöst und von einem zentralen Alarmierungssystem, bevorzugt MoWaS, übernommen werden, ortsbezogen aufbereitet und zur Aussendung der Warnungen und Alarme zugeordnet werden; und/oder
b. die Übertragung von Warnungen zentraler Dienste, bevorzugt MoWaS, über ein Sattelitensystem vom und/oder zum Netzwerk (1) realisiert wird.

9. Verfahren nach einem oder mehreren der vorherigen Ansprüche
**dadurch gekennzeichnet, dass**
die KatController (3) in Fahrzeuge, vorzugsweise wie Land-, Wasser- und/oder Luftfahrzeuge, installiert werden, sodass Warnungen empfangen und bei einem manuellen oder automatischen Auslösungsereignis eine geografische Position und/oder Fahrzeugdaten an eine zuständige Leitstelle (3e) übermitteln.

10. Verfahren nach einem oder mehreren der vorherigen Ansprüche
**dadurch gekennzeichnet, dass**
a. KatController (3a) Sirenen mittels Ausgangssignalen steuern und eine Auslösebestätigung zurücksenden;
b. KatController (3a) die Sirenen über ein Daten-Netzwerk, vorzugsweise ein Mesh-Netzwerk, verbinden;
c. KatController (3a) mit optischen Sirenen, als Signalleuchte, an akustischen Sirenen, als auch separat an jeglichen anderen Standorten, wie Straßenlaternen, eingesetzt werden und/oder
d. optische Sirenen über die Sirenensteuerungen der akustischen Sirenen ausgelöst werden.

11. Verfahren nach einem oder mehreren der vorherigen Ansprüche
**dadurch gekennzeichnet, dass**
a. die KatController (3), vorzugsweise über eine verbundene App und/oder eine verbundene Auslöse/Eingabe-Vorrichtung, ein Ortungssignal auslösen und Ortungsdaten empfangen;
b. KatController (3) ein Ortungssignal empfangen und Ortungsdaten, bevorzugt Standortdaten und/oder Kategoriedaten, aussenden,
c. vorzugsweise eine Ortung für den Ortungsbereich durch eine Leitstelle (3e) und/oder Rettungskräften ausgelöst wird, wobei bevorzugt bei fehlender Verbindung der Leitstelle (3e) zum Ortungsbereich, das Ortungssignal vor Ort ausgelöst wird.

12. Verfahren nach einem oder mehreren der vorherigen Ansprüche
**dadurch gekennzeichnet, dass**
a. KatController Notrufe an eine zuständige Leitstelle (3e) übermitteln, vorzugsweise indem ein Sender eine verbundene App und/oder eine verbundene Auslöse/Eingabe-Vorrichtung verwendet;
b. die KatController (3) an festen Standorten und mobil dazu eingerichtet sind, Notrufe an eine zuständige Leitstelle (3e) zu übermitteln, indem der Sender vorzugsweise eine verbundene Auslöse/Eingabe-Vorrichtung verwendet;
c. die KatController (3) dazu eingerichtet sind, Alarme und Notrufe an zuständige Pager (3g) und/oder Leitstelle (3e) zu übermitteln, wobei der Alarm oder Notruf durch einen Sensor (4a), vorzugsweise durch einen Erschütterungssensor, Feuchtigkeitssensor und/oder Temperatursensor, ausgelöst wird und/oder
d. die KatController (3) bei einem Notruf die Standortdaten und/oder weitere Informationen übermitteln.

13. Verfahren nach einem oder mehreren der vorherigen Ansprüche
**dadurch gekennzeichnet, dass**
a. KatController (3) ein geografisches Ziel zur Adressierung einer KatKomm-Nachricht verwenden,
b. dabei optional eine oder mehrere Identifikationskennungen und/oder Klassifizierungen von KatControllern (3) und/oder KatController-Gruppen (3) zur Einschränkung des Nachrichten-Ziels verwendet werden,
c. ein Routing-Algorithmus zur Anwendung kommt, welcher anhand der geografischen Standorte der zuvor passierten KatControllern (3) - mindestens von einem zuvor passierten KatController (3) - und des geografischen Ziels entscheidet, ob und/oder wie die Nachricht weitergeleitet wird.

14. System zur Warnung, Kommunikation und Notrufsteuerung in autarken Netzen
**dadurch gekennzeichnet, dass**
das System mindestens zwei KatController (3) umfasst, die als Sende- und Empfangseinrichtung untereinander als Knotenpunkte verbunden sind, wobei das System dazu konfiguriert ist, ein Verfahren nach einem oder mehreren der vorherigen Ansprüche auszuführen.

15. Computerprogrammprodukt zur Warnung, Kommunikation und Notrufsteuerung in autarken Netzen,
**dadurch gekennzeichnet, dass**
das Computerprogrammprodukt dazu eingerichtet ist, folgende Schritte auszuführen:
a. Eine Datenverbindung zu mindestens einem KatController (3) herzustellen,
b. einen Datensatz mit Steuerungsbefehlen zu erzeugen und an den KatController (3) zu übermitteln, wobei die Steuerungsbefehle einem KatController (3), einer Gruppe von KatControllern (3) und/oder einem geografischen Bereich zugeordnet sind,
c. durch eine Eingabe eines Nutzers über ein Webinterface, eine Schnittstelle und/oder automatisiert über einen Algorithmus die Steuerungsbefehle sowie den KatController und/oder geografischen Bereich anhand eines Auslösungsereignisses ausgewählt werden.
